# EUROPÄISCHE PATENTSCHRIFT

(11) **EP 1 446 259 B1**
(45) Veröffentlichungstag und Bekanntmachung des Hinweises auf die Patenterteilung: **07.06.2006**
(21) Anmeldenummer: 02714113.4
(22) Anmeldetag: 25.01.2002
(51) Int. Cl.: B23K 26/18

(54) **VERFAHREN ZUM MARKIEREN ODER BESCHRIFTEN VON METALLEN MITTELS LASER**
METHOD FOR MARKING OR LABELING METALS BY MEANS OF A LASER
PROCEDE DE MARQUAGE DE METAUX AU MOYEN D'UN LASER

(30) Priorität: 26.05.2001 DE 10125794
(43) Veröffentlichungstag der Anmeldung: 18.08.2004
(73) Patentinhaber: Sator Laser GmbH, 22525 Hamburg (DE)
(72) Erfinder: ALTMANN, Lutz, 23863 Nienwohld (DE); SATOR, Alexander, P., 22299 Hamburg (DE); CZARNETZKI, Walter, 23847 Meddewade (DE)
(74) Vertreter: Graalfs, Edo
(86) Internationale Anmeldenummer: PCT/EP2002/000773
(87) Internationale Veröffentlichungsnummer: WO 2002/096593

(56) Entgegenhaltungen:
- DE-A- 4 125 500
- DE-A- 19 841 168
- US-A- 5 919 853

## Beschreibung

Die Erfindung bezieht sich auf ein Verfahren zum Markieren oder Beschriften von Metallteilen, insbesondere aus Titan oder Titanlegierungen nach dem Anspruch 1.

Es ist bekannt, Metallteile mit Lasern zu beschriften oder zu markieren, wie z.B. aus DE 4/25500 oder DE19841168 bekannt ist. Dies geschieht beispielsweise mit Hilfe einer Maske, welche die Beschriftung oder Markierung enthält. Es ist jedoch auch möglich, durch entsprechende Führung eines Laserstrahls eine unmittelbare Markierung oder Beschriftung vorzunehmen. Hierbei findet eine thermische Verformung des Gefüges des Metallteils im oberflächennahen Bereich statt. Eine derartige Markierung ist zwar dauerhaft, hat jedoch unter Umständen nachteilige Wirkung im Hinblick auf die Festigkeit des Metallteils.

Es ist ferner bekannt, eine Paste auf ein Metallteil aufzutragen und diese thermisch mit einem Laserlicht zu behandeln, damit eine feste Verbindung zwischen dem Pastenauftrag und dem Metallteil erfolgt. Nachteilig ist der Aufwand für das bekannte Verfahren sowie die Tatsache, dass eine derartige Beschriftung oder Markierung entfernt werden kann.

Der Erfindung liegt die Aufgabe zugrunde, ein Metallteil zu markieren oder zu beschriften, insbesondere ein solches aus Titan oder einer Titanlegierung, bei der eine dauerhafte Beschriftung oder Markierung stattfindet, ohne dass die Oberfläche des Metallteils in schädlicher Weise angegriffen wird.

Diese Aufgabe wird durch die Merkmale des Patentanspruchs gelöst.

Bei der Erfindung wird eine Schreibflüssigkeit oder ein Schreibgel auf den Bereich aufgebracht, der markiert oder beschriftet werden soll. Derartige Schreib- oder Markierflüssigkeiten werden zum Beispiel in den verschiedensten Schreibgeräten verwendet und unter anderem auch dafür, Metallteile zu markieren. Nach dem Auftrag ist es ohne weiteres möglich, die aufgetragene und getrocknete Flüssigkeit zu entfernen. Bei dem erfindungsgemäßen Verfahren wird im Anschluss an den Auftrag des Schreibgels oder der Schreibflüssigkeit eine Beschriftung mit Hilfe eines Laserscanners vorgenommen. Hierbei findet ein thermischer Diffusionsprozess statt, wodurch im vom Laserstrahl getroffenen Bereich Partikel oder Moleküle des Schreibgels oder der Schreibflüssigkeit in den oberflächennahen Bereich eindringen, jedoch noch ohne weiteres sichtbar bleiben. Eine Entfernung des Schriftzugs oder der Markierung ist dann ohne ein Entfernen von metallischem Material nicht mehr möglich. Die außerhalb des Schriftzuges bzw. der Markierung befindliche Schreibflüssigkeit oder Ähnliches kann dann ohne weiteres mit einem geeigneten Mittel, beispielsweise mit einem Lösungsmittel oder dergleichen, entfernt werden.

Die meisten Schreibflüssigkeiten enthalten Graphit in fein disperser Verteilung. Bei solchen Flüssigkeiten wird der beschriebene Effekt beobachtet. Offenbar kommt es zu einer Carbonisierung des Metalls, insbesondere bei Titan oder einer Titanlegierung.

Die Erfindung ermöglicht die Anwendung eines Laserscanners für die Markierung von Metallteilen, ohne dass diese in irgendeiner Weise in ihrer Struktur und Festigkeit beeinträchtigt werden. Das erfindungsgemäße Verfahren hat den weiteren Vorteil, dass der Laserstrahl nicht so energiereich zu sein braucht wie bei einem Gravieren von Metallteilen nach dem Stand der Technik.

Das erfindungsgemäße Verfahren ist für alle Werkstücke aus Metall geeignet, insbesondere jedoch für solche aus Titan und Titanlegierungen.

## Patentansprüche

1. Verfahren zum Markieren oder Beschriften von Metallteilen, insbesondere aus Titan oder Titanlegierungen, bei dem einem zu beschriftenden oder markierenden Bereich ein Stoff zugeführt und mit einem Laserscanner markiert oder beschriftet wird, **dadurch gekennzeichnet, daß** auf dem zu beschriftenden oder markierenden Bereich eine Graphit in disperser Form enthaltende Schreibflüssigkeit oder ein Schreibgel aufgebracht und durch die Einwirkung mit dem Laserstrahl eine Carbonisierung des Metalls bewirkt wird.

## Claims

1. A method for marking or lettering metallic components, particularly those consisting of titanium and titanium alloys, wherein a substance is supplied to an area requiring lettering or marking and said area is marked or lettered by means of a laser scanner, **characterized in that** a writing liquid or writing gel containing graphite in a dispersed form is applied to the area requiring lettering or marking and the action of the laser beam causes the metal to undergo carbonization.

## Revendications

1. Procédé de marquage ou d'inscription sur des pièces métalliques, notamment en titane ou alliages de titane, dans lequel une substance est conduite à une zone devant recevoir le marquage ou l'inscription et est marquée ou reçoit une inscription avec un scanner laser, **caractérisé en ce qu'**un liquide d'écriture contenant du graphite sous forme dispersée ou un gel d'écriture est appliqué sur la zone devant recevoir le marquage ou l'inscription et une carbonisation du métal est réalisée par l'action avec le rayon laser.
